# FASCICULE DE BREVET EUROPEEN

(11) **EP 2 456 031 B1**
(45) Date de publication et mention de la délivrance du brevet: **30.03.2016**
(21) Numéro de dépôt: 11290469.3
(22) Date de dépôt: 11.10.2011
(51) Int. Cl.: H02G 3/18, H01R 25/00, A47B 21/06

(54) **Installation électrique comprenant un appareillage monté mobile en translation dans une ouverture pratiquée dans une paroi**
Elektrische Installation, die ein verschiebbares Gerät in einer Wandöffnung enthält
Electric facility including switchgear translatably mounted in an opening made in a wall

(30) Priorité: 18.11.2010 FR 1004510
(43) Date de publication de la demande: 23.05.2012
(73) Titulaire: Legrand France, 87000 Limoges (FR)
(72) Inventeur: Jarry, Patrice, 72140 Mont Saint Jean (FR)
(74) Mandataire: Orsini, Fabienne

(56) Documents cités:
- WO-A1-2010/116033
- DE-A1-102004 002 838
- GB-A- 2 444 791
- US-A- 5 351 173
- US-A1- 2003 192 761

## Description

### DOMAINE TECHNIQUE AUQUEL SE RAPPORTE L'INVENTION

La présente invention concerne, de manière générale, le domaine des installations électriques.

Elle concerne plus particulièrement une installation électrique telle que définie dans le préambule de la revendication 1.

L'invention trouve une application particulièrement avantageuse dans la réalisation d'installations électriques telles que précitées, dont les éléments de montage sont conçus pour être engagés au travers d'ouvertures pratiquées dans des parois de bureaux, et dont les appareillages électriques sont formés par des blocs multiprises.

### ARRIERE-PLAN TECHNOLOGIQUE

On connaît du document WO 2010/116033 un coffret à installer sous une ouverture pratiquée dans un bureau et qui est conçu pour faciliter la connexion d'appareils électriques (tels que des ordinateurs portables) au réseau électrique local. Ce coffret comporte notamment des ouvertures traversées par des câbles électriques dont les fiches sont accessibles à l'usager et peuvent être tirées à distance du coffret.

Le document US 2003/0192761 porte quant à lui sur un enrouleur de câble téléphonique, qui comporte un boîtier présentant une ouverture traversée par le câble téléphonique. Grâce à cette ouverture, la prise de ce câble reste accessible à l'usager et peut être tirée à distance du boîtier.

Le document GB 2 444 791 porte sur un enrouleur homologue de celui décrit dans le document US 2003/0192761, qui est toutefois spécifiquement conçu pour être installé sous un bureau.

Dans aucun de ces trois documents, il n'est prévu un appareillage électrique monté mobile en translation sur un élément de montage fixé au bureau.

On connaît par ailleurs du document US 5 351 173 une installation électrique comportant un élément de montage à engager au travers d'une ouverture traversante pratiquée dans un bureau, et un bloc multiprise monté mobile en translation sur l'élément de montage.

On connaît aussi du document DE 10 2004 002 838 une installation électrique selon le preambule de la ravendication 1.

Tel que présenté dans ce document, le bloc multiprise comporte, en partie arrière, une fente dans laquelle peut être engagé un élément additionnel supportant des prises électriques telles que des prises réseau. La mobilité du bloc multiprise permet alors d'accéder à ces prises réseau lorsque le bloc multiprise est en position sortie.

Les installations électriques divulguées dans ces documents US 5 351 173 et DE 10 2004 002 838 n'e sont toutefois pas entièrement satisfaisantes. Elles requierèrent en effet l'utilisation de plusieurs câbles électriques pour brancher chaque appareil électrique au réseau.

Typiquement, pour installer un ordinateur portable afin de le connecter au réseau électrique et informatique, une telle installation électrique requiert l'utilisation d'un câble d'alimentation électrique à brancher à l'une des prises de courant du bloc multiprise et d'un câble réseau à brancher à l'une des prises réseau de l'élément additionnel prévu sur le bloc multiprise.

### OBJET DE L'INVENTION

Par rapport à l'état de la technique précité, la présente invention propose de simplifier le branchement en évitant à l'usager de devoir se munir de plusieurs câbles électriques.

Plus particulièrement, on propose selon l'invention une installation électrique telle que définie dans la revendication 1.

Ainsi, grâce à l'invention, l'installation électrique offre non seulement des prises de courant auxquelles peuvent être branchés des appareils électriques, mais également des fiches électriques qui peuvent être tirées jusqu'à ces appareils électriques pour s'y brancher.

De cette manière, le branchement d'appareils électriques est facilité puisqu'il ne nécessite l'utilisation que de câbles d'alimentation électrique, tout autre raccordement pouvant être réalisé au moyen de fiches électriques prévues à cet effet.

Typiquement, cette installation électrique permet ainsi de mettre une fiche réseau (RJ45) et/ou une fiche de téléphone (RJ11) à disposition de l'usager, qui peut ainsi brancher directement son ordinateur portable et/ou son téléphone sur le réseau, sans avoir à se munir au préalable d'un câble réseau ou d'un câble téléphonique.

Le moyen d'extraction permet quant à lui de tirer la fiche électrique vers l'avant pour faciliter son accès par l'usager.

Par ailleurs, grâce à ce moyen d'extraction et à la position du moyen de retenue sur l'élément de montage, le débattement de la fiche électrique est inférieur à celui de l'appareillage électrique. Les contraintes exercées sur le câble extractible sont ainsi réduites et les risques que ce câble ne s'emmêle ou ne s'accroche à un élément quelconque de l'appareillage sont diminués.

D'autres caractéristiques avantageuses et non limitatives de l'installation électrique conforme à l'invention sont définies dans les revendications 2 et suivantes.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'une installation électrique selon l'invention, équipée d'un enrouleur de câble réseau dont la fiche électrique est en position d'attente sur le moyen de retenue de l'installation électrique ;
- la figure 2 est une vue de détail du moyen de retenue de l'installation électrique de la figure 1 ;
- la figure 3 est une vue schématique en perspective du moyen d'extraction prévu sur l'installation électrique de la figure 1 ;
- la figure 4 est une vue schématique en perspective de l'installation électrique de la figure 1, dans laquelle le moyen d'extraction de la figure 3 est en prise avec le moyen de retenue de la figure 2 ; et
- la figure 5 est une vue schématique en perspective de l'installation électrique de la figure 1, dans laquelle la fiche électrique est en position d'accès sur le moyen d'extraction.

Dans la description, les termes « avant » et « arrière » seront utilisés par rapport à la direction du regard de l'usager vers la paroi sur laquelle est rapportée l'installation électrique selon l'invention. Par exemple, lorsque la paroi sera une cloison murale, l'avant désignera le côté tourné vers l'intérieur de la pièce et l'arrière désignera le côté tourné vers l'extérieur de la pièce. Lorsque la paroi sera le plateau horizontal d'un bureau, l'avant désignera le côté tourné vers le haut et l'arrière désignera le côté tourné vers le bas.

Dans cette description, les termes « prise » et « fiche » seront par ailleurs utilisés de manière distincte, la prise désignant l'élément femelle d'un connecteur électrique et la fiche désignant l'élément mâle de ce connecteur électrique.

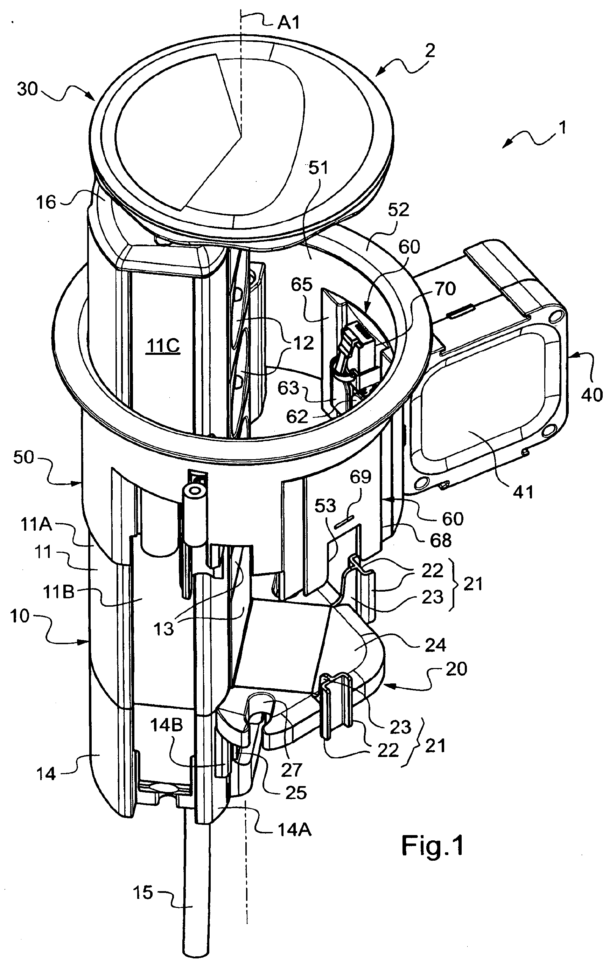

Sur la figure 1, on a représenté une installation électrique 1 selon l'invention, à engager au travers d'une ouverture traversante pratiquée dans une paroi (non représentée).

Dans l'exemple qui sera ici décrit, on considérera que cette paroi est formée par le plateau horizontal d'un bureau sur lequel un appareil électrique (ordinateur portable ou fixe, lampe de bureau, chargeur, ...) peut être posé. On considérera dans le présent exemple que l'appareil électrique posé sur le bureau est un ordinateur portable.

L'ouverture traversante pratiquée dans cette paroi est alors du type de celles qu'on trouve couramment sur les bureaux, pour permettre le passage des câbles d'alimentation électrique de ces appareils électriques. Cette ouverture traversante est généralement circulaire et présente un diamètre de huit à douze centimètres.

L'installation électrique représentée sur la figure 1 comporte alors principalement un élément de montage 50 à engager au travers de cette ouverture traversante et à fixer à la paroi, et un accessoire électrique 2 qui est monté mobile en translation sur l'élément de montage 50.

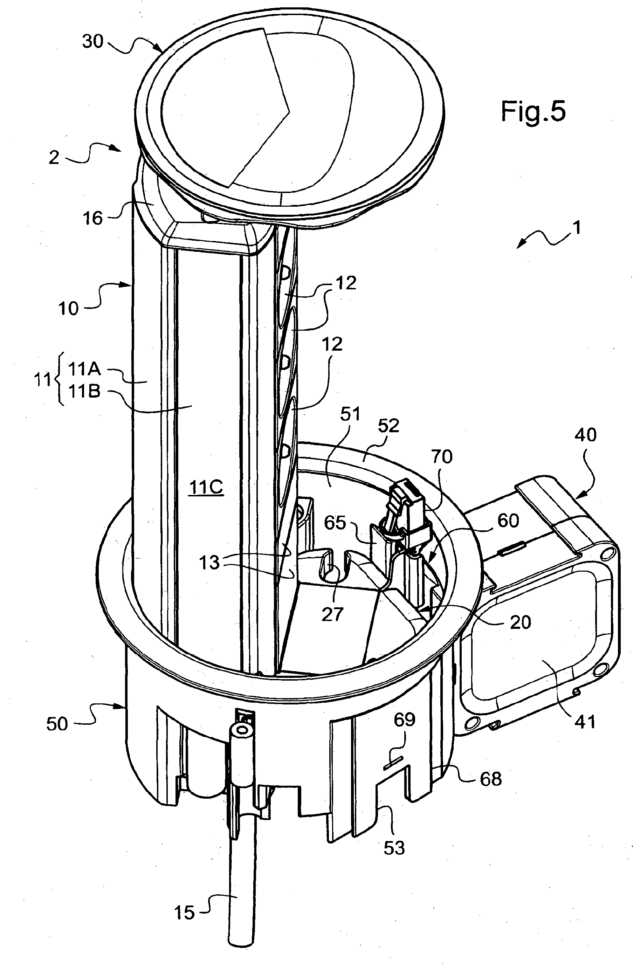

Cet accessoire électrique 2 est plus précisément monté mobile dans l'élément de montage 50 entre deux positions extrêmes, dont une position sortie dans laquelle il fait saillie au-dessus de l'élément de montage 50 (figure 5), et une position rentrée dans laquelle il est situé à l'arrière de l'extrémité avant de l'élément de montage 50.

Tel que représenté sur la figure 1, l'accessoire électrique 2 comporte un bloc multiprise 10 qui est surmonté d'un couvercle 30 adapté à obturer esthétiquement l'ouverture traversante lorsque l'accessoire électrique 2 est en position rentrée.

Bien sûr, en variante, l'appareillage électrique de l'accessoire électrique pourrait être formé, non pas par un bloc multiprise, mais par tout autre type d'appareillage, tel qu'une simple prise de courant ou un simple interrupteur.

Quoi qu'il en soit, ici, comme le montre la figure 1, l'installation électrique 1 est équipée de moyens d'accueil d'une fiche électrique 70 prévue à l'extrémité d'un câble extractible. Sur cette figure, la fiche électrique est une fiche RJ 45 prévue à l'extrémité d'un câble réseau.

L'installation électrique 1 comporte plus précisément un moyen de retenue 60 de cette fiche électrique 70, qui est agencé pour, d'une part, retenir la fiche électrique 70 lorsque l'accessoire électrique 2 est en position rentrée, et, d'autre part. laisser la fiche électrique 70 accessible lorsque l'accessoire électrique 2 est en position sortie de manière qu'elle puisse être saisie par un usager et être tirée à distance de l'appareillage électrique 10.

De cette manière, lorsque l'accessoire électrique 2 est en position sortie, l'usager peut non seulement brancher le câble d'alimentation électrique de son ordinateur portable au bloc multiprise 10, mais il peut également tirer la fiche électrique 70 jusqu'à son ordinateur portable pour l'y brancher.

Le raccordement de l'ordinateur portable au réseau ne nécessite donc qu'un câble d'alimentation électrique (qui est spécifique à la marque de son ordinateur), mais ne nécessite aucun câble réseau supplémentaire (qui est standard) puisque celui-ci est déjà prévu sur l'installation électrique 1.

Préférentiellement, comme cela est d'ailleurs représenté sur les figures, le moyen de retenue 60 est prévu sur l'élément de montage 50.

Alors, il est prévu sur l'accessoire électrique 2 un moyen d'extraction 20 de la fiche électrique 70, qui est agencé pour accrocher la fiche électrique 70 portée par le moyen de retenue 60 à la faveur du déplacement de l'appareillage électrique 10 depuis sa position rentrée vers sa position sortie.

Ainsi, comme le montre la figure 5, lorsque l'usager place l'accessoire électrique 2 en position sortie, le moyen d'extraction 20 accroche automatiquement la fiche électrique 70 pour la positionner au-dessus de la paroi du bureau, de manière qu'elle soit visible et facilement accessible par l'usager.

Dans le mode de réalisation de l'invention représenté sur les figures, l'élément de montage 50 présente l'architecture suivante.

Comme le montre la figure 1, l'élément de montage 50 comporte un manchon 51 de forme globalement tubulaire autour d'un axe principal A1 et de diamètre extérieur égal, au jeu près, à celui de l'ouverture traversante pratiquée dans la paroi. De cette manière, le manchon 51 de l'élément de montage 50 peut être inséré dans cette ouverture traversante, de telle sorte que l'axe principal A1 se retrouve vertical.

Cet élément de montage 50 comporte par ailleurs une couronne 52 qui borde extérieurement l'extrémité avant de son manchon 51. De cette manière, la couronne 52 peut reposer sur la face avant de la paroi, tout autour de l'ouverture traversante, pour bloquer le manchon 51 dans cette ouverture traversante.

L'élément de montage 50 est ici réalisé d'une seule pièce par moulage d'une matière plastique isolante.

L'accessoire électrique 2 est alors monté mobile en translation dans le manchon 51 de l'élément de montage 50 selon l'axe principal A1.

Son bloc multiprise 10 comporte ici un socle 11 qui est profilé selon un axe longitudinal parallèle à l'axe principal A1 et qui présente une section transversale à cet axe longitudinal en forme globale de U, avec un fond 11A et deux ailes 11 B.

Les extrémités de ces ailes 11 B sont repliées l'une vers l'autre et comportent des rails en vis-à-vis (non visibles sur les figures) qui permettent le montage de trois prises de courant 12 et de deux opercules 13 dans l'espace intérieur du socle 11.

Le socle 11 est fermé à son extrémité avant par un embout avant 16 et à son extrémité arrière par un embout arrière 14 par lequel fait saillie un câble d'alimentation 15 qui, d'un côté, est connecté aux prises de courant 12, et qui, de l'autre, comporte une fiche électrique à enficher dans une prise de courant murale pour alimenter les prises de courant 12.

Le couvercle 30 de l'accessoire électrique 2 présente quant à lui une forme globale de disque épais de diamètre égal, au jeu près, au diamètre intérieur du manchon 51 de l'élément de montage 50. Il permet ainsi de fermer esthétiquement l'ouverture traversante pratiquée dans la paroi lorsque l'accessoire électrique 2 est en position rentrée.

Ici, le couvercle 30 est monté sur l'embout avant 16 du socle 11 par des moyens de rotule (non représentés), qui permettent à l'usager de faire basculer le couvercle dans l'ouverture traversante lorsque l'accessoire électrique 2 est en position rentrée afin de pouvoir le saisir plus facilement. Des moyens de rappel (non représentés) sont également prévus pour ramener ce couvercle en position d'obturation de l'ouverture traversante.

Comme le montre la figure 1, le guidage en translation de l'accessoire électrique 2 dans l'élément de montage 50 intervient entre le manchon 51 de l'élément de montage 50 et le socle 11 du bloc multiprise 10.

Les deux ailes 11 B du socle 11 comportent à cet effet chacune une rainure longitudinale 11C, d'axe parallèle à l'axe principal A1 et présentant un fond plat.

Le manchon 51 de l'élément de montage 50 porte en correspondance deux patins (non visibles sur les figures) qui sont engagés dans ces deux rainures longitudinales 11C et de part et d'autre de ces deux rainures, pour permettre au bloc multiprise 10 de coulisser par rapport à l'élément de montage 50 selon l'axe principal A1.

Ces patins sont ici auto-freinés en ce sens qu'ils sont légèrement comprimés et provoquent un frottement sur les ailes 11B du socle 11. Ainsi, lorsqu'il est placé en position sortie, l'appareillage électrique 1 reste immobile tant qu'aucun effort n'est exercé sur celui-ci pour le translater vers sa position rentrée.

Il est par ailleurs prévu des moyens de butée pour limiter le débattement de l'accessoire électrique 2 dans le manchon 51 de l'élément de montage 50. Ces moyens de butée sont ici formés par les embouts 14, 16 du bloc multiprise 10, qui viennent en butée contre les patins du manchon 51 lorsque l'accessoire électrique 2 arrive en position rentrée ou sortie.

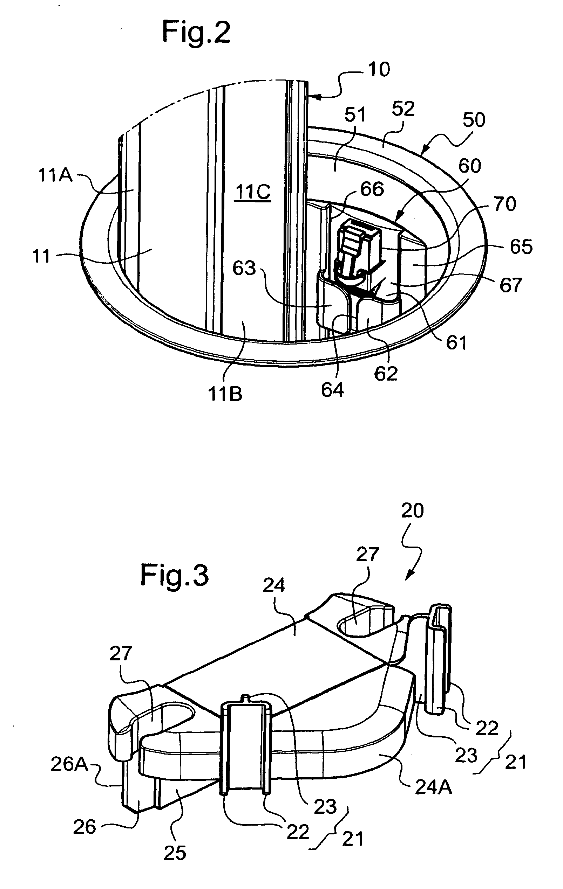

Sur la figure 2, on a représenté en détail le moyen de retenue 60 qui permet de retenir la fiche électrique 70 lorsque l'accessoire électrique 2 est en position rentrée.

Ce moyen de retenue 60 comporte une plaquette 65 sensiblement plane, d'axe longitudinal parallèle à l'axe principal A1, et qui forme un méplat sur la face intérieure du manchon 51 de l'élément de montage 50.

Telle que représentée sur la figure 2, cette plaquette 65 présente un renfoncement 66 qui s'étend en creux sur toute la hauteur de sa face intérieure, parallèlement à l'axe principal A1. Ce renfoncement 66 comporte un fond 67 plat. Il présente une largeur supérieure à celle de la fiche électrique 70 et une profondeur réduite, inférieure à l'épaisseur de la fiche électrique 70.

Cette plaquette 65 porte par ailleurs deux pattes 62, 63 en forme de fines lamelles courbées, qui s'élèvent à partir des bords longitudinaux du renfoncement 66, orthogonalement au fond 67 de ce renfoncement 66, et qui sont repliées à angle droit en direction l'une de l'autre, de telle manière que leurs extrémités libres définissent entre elles une fente 64.

Ces deux pattes 62, 63 délimitent avec le fond 67 du renfoncement 66 un logement traversant 61 pour le passage du câble extractible, qui est ouvert vers l'avant et vers l'arrière.

Ce logement traversant 61 présente une section de passage de taille inférieure à celle de la fiche électrique 70, de manière que cette dernière puisse, en position d'attente, reposer sur les bords avant des deux pattes 62, 63.

Par conséquent, lors de l'installation du câble extractible, il n'est pas possible de passer la fiche électrique 70 au travers du logement traversant 61.

La fente 64, qui s'étend depuis l'arrière jusqu'à l'avant du logement traversant 61, permet alors d'engager latéralement le câble extractible dans le logement traversant 61.

Les deux pattes 62, 63 sont avantageusement situées à une distance de la couronne 52 de l'élément de montage 50 qui est telle que lorsque la fiche électrique 70 est en position d'attente, son extrémité avant s'étend à l'arrière de la couronne 52. La fiche électrique 70 ne forme donc pas obstacle au basculement du couvercle 30.

Ici, comme le montre plus particulièrement la figure 1, le manchon 51 de l'élément de montage 50 porte deux éléments de retenue 60 identiques, agencés pour retenir deux fiches électriques 70 distinctes.

Ces moyens de retenue 60 sont à cet effet situés à distance l'un de l'autre. Ils sont ici écartés angulairement de 90 degrés autour de l'axe principal A1, et sont situés à égale distance du bloc multiprise 10 de sorte qu'ils font sensiblement face aux prises de courant 12.

Dans le mode de réalisation représenté sur les figures, ces moyens de retenue 60 viennent de formation par moulage d'une seule pièce avec l'élément de montage 50.

Bien entendu, on pourrait prévoir en variante que les moyens de retenue 60 soient distincts de l'élément de montage 50 et qu'ils comportent des moyens de fixation sur celui-ci,

Tel que représenté sur la figure 1, le moyen d'extraction 20 prévu sur le bloc multiprise 10 est adapté à accrocher les fiches électriques 70 portées par les deux moyens de retenue 60 prévus sur l'élément de montage 50, à la faveur du déplacement de l'accessoire électrique 2 depuis sa position rentrée vers sa position sortie.

Comme le montre la figure 3, ce moyen d'extraction 20 comporte à cet effet une base triangulaire 24, dont un bord porte un flasque 25 équipé de moyens de fixation 26 au bloc multiprise 10, et dont les deux autres bords portent des fourches 21 adaptées à accrocher les fiches électriques 70.

La base triangulaire 24 se présente ici sous la forme d'une fine plaque plane en forme de triangle isocèle, bordée vers l'arrière par un rebord 24A de rigidification.

Le flasque 25 se présente pour sa part sous la forme d'une plaque plane rectangulaire. Il s'étend à partir du bord d'hypoténuse de la base triangulaire 24, vers l'arrière, orthogonalement au plan de la base triangulaire 24.

Ce flasque 25 est ainsi adapté à s'appliquer contre la face intérieure 14A de l'embout arrière 14 du bloc multiprise 10 (voir figure 1).

Les moyens de fixation 26 du flasque 25 sur l'embout arrière 14 du bloc multiprise 10 comportent ici des moyens de guidage en translation du flasque 25 sur l'embout arrière 14 et des moyens de blocage par encliquetage de cette translation.

Les moyens de guidage en translation comportent, sur le flasque 25, deux rails 26A formés par les tranches longitudinales du flasque 25. Ils comportent en correspondance deux rebords 14B prévus en saillie de la face intérieure 14A de l'embout arrière 14 du bloc multiprise 10, parallèlement à l'axe principal A1, pour délimiter deux rainures dans lesquelles peuvent coulisser les deux rails 26.

Les moyens de blocage comportent pour leur part une dent d'encliquetage (non visible sur les figures), qui s'étend en saillie de la face extérieure du flasque 25 et qui est agencée pour se loger dans un logement prévu en correspondance dans la face intérieure 14A de l'embout arrière 14 du bloc multiprise 10.

Comme le montre la figure 3, chaque fourche 21 comprend un support 23 qui s'étend à partir du bord correspondant de la base triangulaire 24 et qui est adapté à coulisser dans la fente 64 du moyen de retenue 60 correspondant, et deux bras 22 qui s'étendent à partir du support 23 et qui sont adaptés à coulisser au travers du logement 61 afin d'accrocher la prise électrique 70 qui repose sur ce moyen de retenue 60.

Chaque fourche 21 est à cet effet profilée suivant l'axe principal A1 Son support 23 présente un profil transversal à l'axe principal A1 en forme de I candis que ses bras 22 présentent ensemble un profil transversal en forme de U.

Le support 23 se présente ainsi sous la forme d'une plaquette qui s'étend à partir du bord correspondant de la base triangulaire 24, orthogonalement à celui-ci et vers l'avant.

Les deux bras 22 forment ensemble un rail d'axe parallèle à l'axe longitudinal, ouvert vers l'extérieur pour coulisser le long du câble extractible.

Le bord d'extrémité avant de ces deux bras 22 forme ainsi un siège en U, adapté à saisir la fiche électrique 70 par l'arrière et à la soulever jusqu'au-dessus de la couronne 52 de l'élément de montage 50, à la faveur du déplacement de l'accessoire électrique 2 depuis sa position rentrée vers sa position sortie.

Dans le mode de réalisation représenté sur les figures, ce moyen d'extraction 20 vient de formation d'une seule pièce par moulage d'une matière isolante.

Bien entendu, on pourrait en variante prévoir que ce moyen d'extraction vienne de formation avec l'embout arrière de la prise de courant, pour former une seule pièce avec celui-ci.

Ici, comme le montre la figure 3, l'accessoire électrique 2 comporte par ailleurs deux moyens de retenue 27, agencés pour, d'une part, retenir deux autres fiches électriques (non représentées), et, d'autre part, laisser ces fiches électriques accessibles lorsque l'accessoire électrique 2 est en position sortie de manière qu'elles puissent être saisies par un usager et être tirées à distance du bloc multiprise 10.

Ces moyens de retenue sont en l'espèce formés par deux orifices oblongs 27 prévus au travers de la base triangulaire 24 du moyen d'extraction 20.

Ces orifices 27 s'étendent plus précisément ici à proximité des deux sommets de la base triangulaire 24 qui sont adjacents au bord d'hypoténuse de cette base triangulaire 24.

Ils débouchent avantageusement sur le bord de la base triangulaire 24, ce qui permet d'y rapporter latéralement les câbles extractibles des deux autres fiches électriques.

Dans le mode de réalisation de l'invention représenté sur la figure 1, le câble extractible de chaque fiche électrique 70 est en partie logé dans un enrouleur 40 fixé à l'élément de montage 50.

Cet enrouleur 40, qui ne fait pas à proprement parler l'objet de la présente invention, comporte à cet effet un boîtier parallélépipédique creux 41 qui loge intérieurement des moyens d'enroulement automatique du câble extractible et qui présente extérieurement des moyens de fixation (non visibles) sur la face extérieure du manchon 51 de l'élément de montage 50, ici formés par une coulisse.

Comme on peut le voir sur la figure 1 où l'emplacement de l'un des enrouleurs 40 est laissé libre, les moyens de fixation prévus en correspondance sur le manchon 51 de l'élément de montage 50 comportent, d'une part, un coulisseau 68 à engager dans la coulisse prévue sur le boîtier de l'enrouleur 40, et, d'autre part, une dent d'encliquetage 69 à engager dans un creux prévu en correspondance sur le boîtier de l'enrouleur 40 pour bloquer la translation du coulisseau 68 dans la coulisse.

Sur cette figure 1, on observe par ailleurs qu'il est prévu dans le bord d'extrémité arrière du manchon 51 de l'élément de montage 50, au niveau de cet emplacement, une encoche 53 formant un passage pour le câble extractible.

Sur la figure 1, on a représenté l'installation électrique 1 après que l'usager a commencé à soulever l'accessoire électrique 2.

En effet, initialement, en position rentrée, cet accessoire électrique 2 est situé de telle manière que son couvercle 30 s'étend dans le plan de la couronne 52 de l'élément de montage 50. Dans cette position, la fiche électrique 70 repose sur le moyen de retenue 60 correspondant de l'élément de montage 50.

Pour avoir accès aux prises de courant 12 du bloc multiprise 10 et à la fiche électrique 70, l'usager exerce un appui sur une zone quelconque de la périphérie du couvercle 30, ce qui a pour effet de faire basculer ce dernier. L'usager peut alors saisir fermement le couvercle 30 par sa tranche et exercer une traction sur ce dernier afin d'extraire le bloc multiprise 10 vers sa position sortie (voir figure 1).

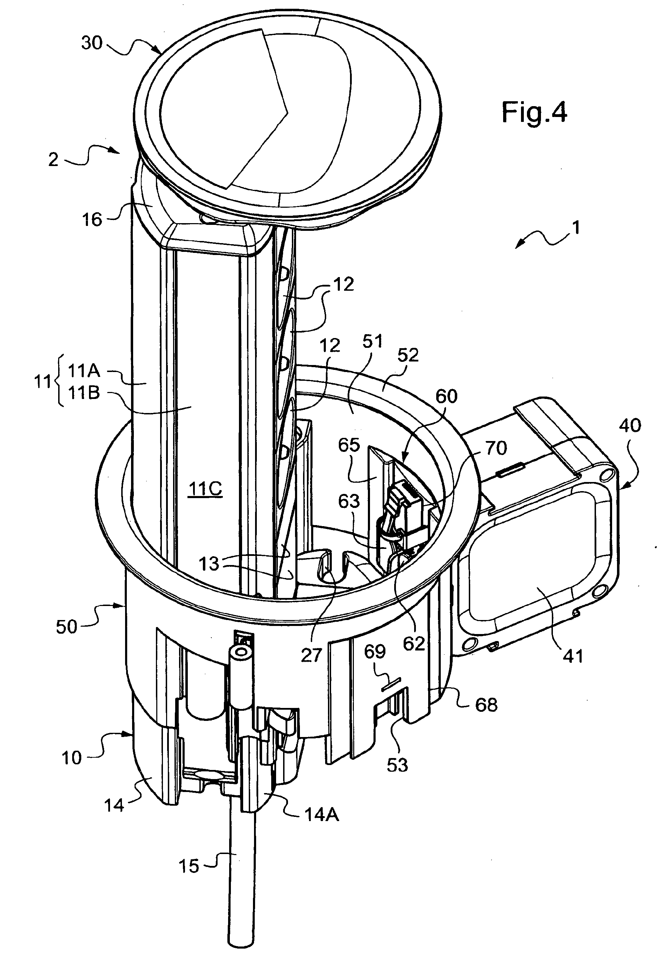

Lors du coulissement de l'accessoire électrique 2 dans l'élément de montage 50, les fourches 21 du moyen d'extraction 20 viennent s'engager dans les logements 61 des moyens de retenue 60 (voir figure 4), ce qui permet de pousser la fiche électrique 70 vers l'avant.

Ainsi, lorsque l'accessoire électrique 2 arrive en position sortie (voir figure 5), la fiche électrique 70 fait saillie au-dessus de la couronne 52 de l'élément de montage 50, ce qui la rend visible et facilite son accès.

Lorsque l'usager relâche le couvercle 30, l'accessoire électrique 2 reste en position sortie grâce aux patins de l'élément de montage 50.

L'usager peut alors facilement brancher le câble d'alimentation électrique de son ordinateur portable à l'une des prises de courant 12 du bloc multiprise 10 et il peut facilement tirer la fiche électrique 70 jusqu'à la prise réseau prévue sur son ordinateur portable.

Une fois cette opération effectuée, l'usager exerce un effort de pression sur le couvercle 30 pour faire coulisser l'accessoire électrique 2 en position rentrée. Dans cette position, le couvercle 30 reste légèrement incliné pour permettre le passage du câble d'alimentation électrique et du câble extractible au travers de l'ouverture traversante pratiquée dans la paroi.

Sur les figures, la fiche électrique est une fiche RJ 45. On notera toutefois que l'installation électrique pourrait être mise en oeuvre avec tout autre type de fiche électrique, telle qu'une fiche au standard USB, mini-USB, Firewire, HD15, jack, ...

La présente invention n'est nullement limitée au mode de réalisation décrit et représenté, mais l'homme du métier saura y apporter toute variante conforme à son esprit.

En particulier, on pourrait prévoir de positionner l'installation électrique dans une paroi autre que celle d'une table de bureau. Elle pourrait par exemple être positionnée dans une cloison murale ou dans un sol, ou encore dans un plan de travail d'une cuisine.

Par ailleurs, on pourrait prévoir que l'installation électrique représentée sur les figures soit dépourvue de moyen d'extraction, auquel cas l'usager serait contraint, pour tirer la fiche électrique, de la saisir alors qu'elle repose encore sur le moyen de retenue prévu à l'intérieur de l'élément de montage.

Dans le mode de réalisation représenté sur les figures, l'élément de retenue vient de formation avec l'élément de montage 50. Bien entendu, on pourrait en variante prévoir qu'il forme une pièce distincte de cet élément de montage 50, et qu'il comporte des moyens de fixation sur ce dernier.

Telle que représenté sur la figure 3, la base triangulaire 24 de l'élément d'extraction 20 est fermée. On pourrait en variante prévoir qu'elle présente une fenêtre centrale dans laquelle pourrait être fixée une prise électrique telle qu'une prise au standard HD15, dans laquelle l'usager pourrait brancher un câble d'écran d'ordinateur.

## Revendications

1. Installation électrique (1) comportant :
- un élément de montage (50) à engager au travers d'une ouverture traversante pratiquée dans une paroi, et
- un appareillage électrique (10) monté mobile en translation sur l'élément de montage (50) entre une position rentrée dans ledit élément de montage (50) et une position sortie vers l'avant dudit élément de montage (50),
**caractérisée en ce que** ledit élément de montage (50) comporte un moyen de retenue (60) d'une fiche électrique (70) prévue à l'extrémité d'un câble extractible, qui est agencé pour, d'une part, retenir la fiche électrique (70) lorsque l'appareillage électrique (10) est en position rentrée, et, d'autre part, laisser la fiche électrique (70) accessible lorsque l'appareillage électrique (10) est en position sortie de manière qu'elle puisse être saisie par un usager et être tirée à distance de l'appareillage électrique (10),
et **en ce que** ledit appareillage électrique (10) comporte un moyen d'extraction (20) de la fiche électrique (70), qui est agencé pour accrocher la fiche électrique (70) portée par le moyen de retenue (60) à la faveur du déplacement de l'appareillage électrique (10) depuis sa position rentrée vers sa position sortie, pour positionner ladite fiche électrique (70) de telle manière qu'elle soit visible par l'usager.

2. Installation électrique selon la revendication précédente, dans laquelle ledit moyen de retenue (60) définit un logement traversant (61) qui est ouvert à l'avant et à l'arrière pour le passage du câble extractible.

3. Installation électrique selon la revendication précédente, dans laquelle ledit logement traversant (61) est ouvert latéralement par une fente (64) qui s'étend depuis l'arrière jusqu'à l'avant pour l'installation de la fiche électrique (70) dans le moyen de retenue (60).

4. Installation électrique selon la revendication précédente, dans laquelle ledit moyen de retenue (60) comporte deux pattes (62, 63) qui s'étendent à distance l'une de l'autre pour délimiter entre elles ledit logement traversant (61) et dont les extrémités libres sont repliées l'une vers l'autre pour définir entre elles ladite fente (64).

5. Installation électrique selon l'une dés revendications précédentes, dans laquelle ledit moyen de retenue (60) vient de formation par moulage d'une matière isolante, d'une seule pièce avec ledit élément de montage (50).

6. Installation électrique selon l'une des revendications précédentes, dans laquelle, ledit élément de montage (50) comportant un manchon tubulaire (51) bordé à l'avant par une couronne (52), ledit moyen de retenue (60) est prévu sur le manchon tubulaire (51) pour retenir la fiche électrique (70) à distance de la couronne (52).

7. Installation électrique selon la revendication 3, dans laquelle ledit moyen d'extraction (20) comporte une fourche (21) comprenant un support (23) adapté à coulisser dans ladite fente (64) et deux bras adaptés à coulisser au travers dudit logement (61) pour accrocher la prise électrique (70).

8. Installation électrique selon la revendication précédente, dans laquelle ledit moyen d'extraction (20) vient de formation par moulage d'une seule pièce d'une matière isolante et comporte des moyens de fixation sur ledit appareillage électrique (10).

9. Installation électrique selon l'une des revendications précédentes, dans laquelle il est prévu deux moyens de retenue (60).

10. Installation électrique selon les revendications 7 et 9, dans laquelle les deux moyens de retenue (60) sont identiques et dans laquelle ledit moyen d'extraction (20) comporte deux fourches (21) identiques.

11. Installation électrique selon l'une des revendications 1 à 4, dans laquelle ledit moyen de retenue est prévu sur l'appareillage électrique (10).

## Patentansprüche

1. Elektroinstallation (1), umfassend:
- ein Montageelement (50), das durch eine durchgehende Öffnung in einer Wand einzustecken ist, und
- ein Elektrogerät (10), das auf dem Montageelement (50) zwischen einer in das Montageelement (50) eingeschobenen Position und einer nach vorne des Montageelements (50) herausgezogenen Position translatorisch verschiebbar gelagert ist,
**dadurch gekennzeichnet, dass** das Montagelement (50) ein Rückhaltemittel (60) für einen am Ende eines ausziehbaren Kabels vorgesehenen Elektrostecker (70) umfasst, wobei das Rückhaltemittel dazu angeordnet ist, um zum einen den Elektrostecker (70) zurückzuhalten, wenn das Elektrogerät (10) in der eingeschobenen Position ist, und zum anderen, um den Elektrostecker (70) zugänglich zu lassen, wenn das Elektrogerät (10) in der herausgezogenen Position ist, sodass der Elektrostecker von einem Anwender ergriffen und vom Elektrogerät (10) entfernt gezogen werden kann,
sowie dadurch, dass das Elektrogerät (10) ein Mittel zum Herausziehen (20) des Elektrosteckers (70) umfasst, welches angeordnet ist, um den vom Rückhaltemittel (60) getragenen Elektrostecker (70) zugunsten der Verschiebung des Elektrogeräts (10) von seiner eingeschobenen Position in die herausgezogene Position einzuhängen, um den Elektrostecker (70) derart anzuordnen, dass er für den Anwender sichtbar ist.

2. Elektroinstallation nach vorausgehendem Anspruch, bei der das Rückhaltemittel (60) eine durchgehende Aufnahme (61) definiert, die vorne und hinten zum Durchführen des ausziehbaren Kabels offen ist.

3. Elektroinstallation nach vorausgehendem Anspruch, bei der die durchgehende Aufnahme (61) seitlich durch einen Schlitz (64) geöffnet ist, der sich von hinten nach vorne erstreckt, um den Elektrostecker (70) in das Rückhaltemittel (60) zu installieren.

4. Elektroinstallation nach vorausgehendem Anspruch, bei der das Rückhaltemittel (60) zwei Klammern (62, 63) umfasst, die sich entfernt voneinander erstrecken, um zwischen ihnen die durchgehende Aufnahme (61) abzugrenzen, und deren freie Enden zueinander umgeknickt sind, um zwischen ihnen den Schlitz (64) zu definieren.

5. Elektroinstallation nach einem der vorausgehenden Ansprüche, bei der das Rückhaltemittel (60) in einem Stück mit dem Montageelement (50) aus einem isolierenden Werkstoff gussgeformt ist.

6. Elektroinstallation nach einem der vorausgehenden Ansprüche, bei der, während das Montagelement (50) eine vorne durch einen Kranz (52) eingefasste Rohrmuffe (51) umfasst, das Rückhaltemittel (60) an der Rohrmuffe (51) vorgesehen ist, um den Elektrostecker (70) von dem Kranz (52) entfernt zu halten.

7. Elektroinstallation nach Anspruch 3, bei der der Auszieher (20) eine Gabel (21) mit einer Halterung (23) umfasst, die in den Schlitz (64) gleiten kann, sowie zwei Arme, die durch die Aufnahme (61) gleiten können, um den Elektrostecker (70) einzuhängen.

8. Elektroinstallation nach vorausgehendem Anspruch, bei der der Auszieher (20) in einem Stück aus einem isolierenden Werkstoff gussgeformt ist und Mittel zur Befestigung am Elektrogerät (10) umfasst.

9. Elektroinstallation nach einem der vorausgehenden Ansprüche, in der zwei Rückhaltemittel (60) vorgesehen sind.

10. Elektroinstallation nach den Ansprüchen 7 und 9, bei der die zwei Rückhaltemittel (60) identisch sind und bei der der Auszieher (20) zwei identische Gabeln (21) umfasst.

11. Elektroinstallation nach einem der Ansprüche 1 bis 4, bei der das Rückhaltemittel am Elektrogerät (10) vorgesehen ist.

## Claims

1. An electrical installation (1) comprising:
• a mounting element (50) for engaging through a through opening formed in a panel; and
• an electrical accessory (10) that is mounted to move in translation on the mounting element (50) between a retracted position inside said mounting element (50) and an extended position towards the front of said mounting element (50);
the electrical installation being **characterized in that** said mounting element (50) includes retainer means (60) for retaining an electric plug (70) provided at the end of an extractable cable, which retainer means are arranged firstly to retain the electric plug (70) when the electrical accessory (10) is in its retracted position, and secondly, to allow the electric plug (70) to be accessed when the electrical accessory (10) is in its extended position so that a user can take hold of it and pull it to a distance from the electrical accessory (10); and
**in that** said electrical accessory (10) includes extractor means (20) for extracting the electric plug (70), which extractor means are arranged to catch the electric plug (70) carried by the retainer means (60) when the electrical accessory (10) moves from its retracted position towards its extended position, so as to position said electric plug (70) in such a manner that it can be seen by the user.

2. An electrical installation according to the preceding claim, wherein said retainer means (60) define a through housing (61) that is open at the front and at the rear for passing the extractable cable.

3. An electrical installation according to the preceding claim, wherein said through housing (61) opens laterally via a slot (64) that extends from the rear to the front for installing the electric plug (70) in the retainer means (60).

4. An electrical installation according to the preceding claim, wherein said retainer means (60) include two tabs (62, 63) that extend spaced apart from each other so as to co-operate with each other to define said through housing (61), and having free ends that are folded towards each other so as to co-operate with each other to define said slot (64).

5. An electrical installation according to any preceding claim, wherein said retainer means (60) are formed integrally with said mounting element (50) by molding an insulating material.

6. An electrical installation according to any preceding claim, wherein said mounting element (50) includes a tubular sleeve (51) that is bordered at the front by a collar (52), and said retainer means (60) are provided on the tubular sleeve (51) so as to retain the electric plug (70) at a distance from the collar (52).

7. An electrical installation according to claim 3, wherein said extractor means (20) include a fork (21) that comprises a support (23) that is suitable for sliding in said slot (64), and two arms that are suitable for sliding through said housing (61) so as to catch the socket outlet (70).

8. An electrical installation according to the preceding claim, wherein said extractor means (20) are formed as a single piece by molding an insulating material, and include fastener means for fastening on said electrical accessory (10).

9. An electrical installation according to any preceding claim, wherein two retainer means (60) are provided.

10. An electrical installation according to claim 7 and claim 9, wherein the two retainer means (60) are identical, and wherein said extractor means (20) include two identical forks (21).

11. An electrical installation according to any one of claims 1 to 4, wherein said retainer means are provided on the electrical accessory (10).
